# EUROPEAN PATENT SPECIFICATION

(11) **EP 1 400 177 B1**
(45) Date of publication and mention of the grant of the patent: **24.12.2008**
(21) Application number: 03019603.4
(22) Date of filing: 04.09.2003
(51) Int. Cl.: A23L 1/105, A23C 11/10, A23L 2/38

(54) **Method for preparing a rice milk**
Verfahren zur Herstellung von Reismilch
Méthode de préparation de lait de riz

(30) Priority: 19.09.2002 IT MO20020257
(43) Date of publication of application: 24.03.2004
(73) Proprietor: Abafoods S.r.l., 45021 Badia Polesine (RO) (IT)
(72) Inventor: Ravagnani, Vinicio, 45030 Castelnovo Bariano (RO) (IT); Sambataro, Diego, 35017 Piombino Dese (PD) (IT)
(74) Representative: Crugnola, Pietro

(56) References cited:
- EP-A- 0 970 614
- WO-A-02/065855
- US-A- 5 219 597
- US-A- 5 395 623
- US-A- 5 510 128
- US-B1- 6 265 001
- DATABASE WPI Section Ch, Week 199444 Derwent Publications Ltd., London, GB; Class D13, AN 1994-355575 XP002266417 & KR 9 312 206 A (HAI TAI CONFECTIONERY CO LTD) 24 December 1993 (1993-12-24)
- PATENT ABSTRACTS OF JAPAN vol. 1995, no. 11, 26 December 1995 (1995-12-26) & JP 7 203860 A (SHIMANE PREF GOV; others: 01), 8 August 1995 (1995-08-08)
- PATENT ABSTRACTS OF JAPAN vol. 0081, no. 68 (C-236), 3 August 1984 (1984-08-03) & JP 59 066876 A (OOKURA SHIYUZOU KK), 16 April 1984 (1984-04-16)

## Description

The invention concerns a method for preparing a liquid milk-based food, so called rice milk.

At present, the rice milk is a good choice for those ranks of consumers who must avoid taking particular nutrients, said nutrients being present in the milk of animal origin, e.g. cow's milk.

In fact, there are persons who are allergic to cow's milk proteins, as well as subjects who suffer from lactose (disaccharide of milk) intolerance.

Analogously, the cholesterol which is present in the so-called "whole" cow's milk (i.e., comprising the lipid fraction) makes the latter extremely unsuitable for people carrying cardiovascular pathologies. It is possible to partially or totally remove milk fats (skimming), but this means substantially altering the taste of the food.

Liquid foods of vegetable origin (soybean milk, rice milk) have been suggested as substitutes for cow's milk, since they lack in cholesterol, lactose or allergenic proteins.

In particular, the rice milk has characteristics of tastiness that make it more welcome by the user, in comparison with the soybean milk.

Given the favourable acknowledgement among the consumers, various method for preparing rice milk have been arranged wherein some phases are constantly present, said phases being so summarizable:
a) the rice is hydrated and treated with enzymes which can depolymerize starch (polysaccharide which is contained in the rice itself) in order to obtain simple sugars (saccharification);
b) the residues of raw material which have greater molecular weight are removed from the intermediate product so obtained;
c) emulsifying substances are added to the resulting liquid which is then homogenized.

The rice is ground in order to enable the enzymatic digestion according to a), as it is disclosed, for example, in US 6265001, KR 9312206 and EP 0970614. In this way, in fact, the vegetable involucres of the caryopses are broken, so enabling the glycolytic enzymes to interact with the molecules of the polysaccharides that are contained in the rice.

Such a procedure implies a rise in plant investments, if it is performed in the same place in which the rice milk is produced, while it implies a greater difficulty in verifying raw material and a possible additional expense for supplies, if an exterior supplier provides the flour.

Subject to hydration of the rice flour, the phase of saccharification provides for the use of different enzymes in subsequent stages.

At first, the rice is treated with α-amylases which resolve the α 1-4 glycosidic chemical bonds which are present in the molecules of amylose and amylopectin, these latter being component of starch.

In this way, a first reaction product is obtained, said product being distinguished by a depolymerization level of the starch that is analytically determinable.

In well-known methods, this enzymatic treatment is performed at high temperatures (90-100° C in US 6265001). In fact, thermostable α-amylases are used, said α-amylases being distinguished by an optimal enzymatic activity at high temperatures and presumably produced through genetically modified microorganisms.

The use of high temperatures during the saccharification implies a rise in energy consumption and thus a corresponding rise in production expenses.

Furthermore, if a rice milk of "organic" type should be produced, i.e. by using rice which derives from organic farming and without resorting to substances which derive from genetically modified microorganisms, the use of the above-mentioned thermostable enzymes would result prevented by definite regulations in force.

By adding further enzymes (β-amylase and/or glucoamylase), the starch is further depolymerized in order to liberate simple sugars, these latter providing the finished product with the sweet taste that is appreciated by the consumer. The above-mentioned enzymes, which synergically operate with the α-amylase, enable the initial starch to be transformed in a mixture of polysaccharides, oligosaccharides, disaccharides (maltose) and/or monosaccharides (glucose).

In particular, the depolymerization proceeds up to the hydrolysis in glucose by exclusively using glucoamylase (US 6265001, EP 0970614); on the contrary, a final mixture containing monosaccharides and (more) disaccharides is obtained by jointly using glucoamylase and β-amylase (EP 0970614, KR 9312206).

The product thus obtained contains insoluble residues, which consist of the vegetable fibres and the proteins of the rice.

Methods involving filtration and/or centrifugation (EP 0970614, US 6265001, KR 9312206) can be applied, in order to remove these undesired components.

To this purpose, centrifugal extractors or separators are commonly used which are provided with a discontinuous working cycle, such those which are usually utilized in the dairy sector. These devices, which discharge the insoluble residues in a discontinuous manner, may result unsuitable because of the high percentage of solid residue which is present in the rice.

Once a really liquid product has been obtained, the latter is treated with emulsifying substances and homogenized (EP 0970614, KR 9312206) in order to obtain a final product having a consistency that is comparable to that of a milk of animal origin.

US 5395623 discloses a method for preparing a bakery ingredient including a milled, starch-bearing grain, which has about 60-80% of the starch thereof enzymatically eliminated by conversion to a soluble form and about 4 to 30% by weight of a caramel-sugar mixture. Baked goods prepared from the bakery ingredient show superior crumb strength, are resistant to degradation by excessive or insufficient moisture and are characterized by extended shelf-life capability.

US5510128 discloses a process for producing an emulsified filtrate of half-hulled rice, comprising the steps of mixing malted rice, boiled half-hulled rice and hot water before or after saccharification of malted rice at 50°C-60°C, preferably 57.5°C, and emulsifying and filtering the mixture to obtain an emulsified filtrate, whereby the half-hulled rice can be processed into a drink having a pleasant taste and texture without loss of nutrients.

US 5219597 discloses a method for producing a highly concentrated, rice-derived lactic acid fermented product which tastes highly sweet and sour, and whose flavour and texture are excellent. The rice is gelatinized and then liquefied and saccharified by a primary treatment with alpha-amylase and glucoamylase. After sterilization, it is inoculated with lactic acid bacteria and undergoes a secondary treatment with alpha-amylase and glucoamylase, so that the glucose produced thereby continuously ferments to lactic acid.

JP 07203860 discloses a method for producing an ice confection containing an emulsified product, which product is obtained by subjecting rice to an alpha-starch-producing treatment, and/or a liquidized or saccharified product that is produced by treating the emulsified product with a starch-decomposing enzyme. The emulsified product is obtained by adding water to a rice gruel obtained by boiling rice, and subsequently stirring the mixture to give a paste. The liquidized product is obtained by treating the rice gruel with an alpha-amylase at 60°C.

JP 59066876 discloses a method for producing an alcohol-containing seasoning, in which highly polished rice grains are crushed in water, and the resultant mixture is added with an alpha-amylase preparation. The mixture is gelatinized by heating and the gelatinized rice is mixed with malted rice, water and alcohol, fermented and aged at about 30°C for about 10 days, and filtered.

WO 02/065855 discloses methods for producing non-dairy, ready-to-use milk substitute cereal dispersions having intact beta-glucans, proteins, and natural sugars, in which a suspension of (dehulled, heat-treated, pressed and/or milled) cereal is treated with an enzyme preparation comprising at least one hydrolase having the ability to hydrolyse alpha-glycosidic bonds and having no glucanase and proteinase effect. The hydrolase may be selected from the group consisting of beta-amylase, alpha-amylase, amyloglucosidase and pullulanase. When beta-amylase and alpha-amylase are selected, they are introduced simultaneously in order to provide for accelerated enzymatic hydrolysis and for reduced amounts of the enzymes than otherwise needed if the enzymes were used separately.

An aim of the present invention is to improve the methods for preparing the rice milk.

An other aim is to eliminate preliminary mechanical treatment of rice, thus eliminating rise in costs of investment and/or raw material, as well as obtaining a better guarantee for the quality and the provenance of the raw material itself.

A further aim is to provide for a method for preparing a rice milk wherein, during the phase of enzymatic treatment, it is possible to process the product at temperatures which are lower than those commonly used, in order to reduce the energy expenditure of the process.

A yet further aim is to provide a method for preparing a rice milk wherein it is possible to remove the insoluble residues from the product in a particularly effective manner.

A further other aim is to provide for a method for preparing an organic rice milk, i.e. according to the legislation which regulates the sector of organic food products.

According to the invention a method is provided for preparing a rice-based drink, as defined in Claim 1.

The temperature of the water is such as to obtain the cooking of the rice and the gelatinization of the starch and thus to expose the latter to the subsequent action of the saccharifying means.

This makes useless to grind the rice, effecting a cut of manufacturing time and costs.

Non-thermostable enzymes are used which derive from microorganisms that are not genetically modified, so that it is possible to carry out a first stage of the process of saccharification by working at temperatures which are substantially lower than those well-known, thus allowing an energy saving.

Furthermore, the use of enzymes deriving from microorganisms which are not genetically modified means that it is possible to comply with the regulations in force, when producing a rice milk of organic type.

To exemplificative purpose, the processing method which enables the invention to be implemented and an organic rice milk to be produced is disclosed below, said organic rice milk having the following average per cent formula:

| **Ingredient:** | **%** |
|---|---|
| Rice | 16,97 |
| Sunflower oil | 1,10 |
| Water | 81,62 |
| Amylase | 0,136 |
| CaCO₃ | 0,090 |
| Sea salt | 0,85 |

The above-mentioned formula concerns a "natural" product, i.e. lacking in ingredients which are aimed at giving a specific colour and/or taste.

Nevertheless, the above-mentioned ingredients can be advantageously added also when a production of rice milk according to the invention is carried out.

The rice, which comes from organic farming, is stocked in cold room (4°C) at the production plant and remains thereto up to the time of use.

The water to be used during the process is heated at 95°C in a first tank of the plant. Salt is added to the intact rice, i.e. rice not crushed either mechanically or otherwise, and the latter is introduced in the plant (through loading hopper) and sent to a second tank, wherein it is mixed with water at 95°C. This enables the starch to be gelatinized in order to enable the subsequent action of the enzymes.

A bacterial α-amylase, as first enzyme, is added to this mixture in amount of 1 kilogram/1000 litres of water, said α-amylase being attested by the manufacturer as not deriving from genetically modified microorganisms (Bioamylase-BAA from Quest International, having minimum activity equal to 570.000 BAA u/ml).

Through cooling recirculation, the mixture is brought to a temperature suitable for the enzymatic treatment (85-70°C). The enzyme is added to the mixture in two different stages: half of the dose is added at 80°C, and the remaining amount is added when the temperature of 70°C is obtained.

During this phase, the process of saccharification is monitored through instrumental analysis of the degree Brix of the mixture, said analysis being performed at the production line. The recirculation, and thus the enzymatic treatment, goes on till 13, 5° Bx is obtained.

The product is then transferred to a third tank and mixed therein with a second saccharifying enzyme. The enzyme is a glucoamylase, in amount of 0.6 kilogram/1000 litres of water, said glucoamylase being attested by the manufacturer as not deriving from genetically modified microorganisms (Amylo 300 from Quest International, having minimum activity equal to 1.100 AG GOPAP u/ml).

A second process of cooling recirculation, carried on between 60°C and 70°C, enables the second enzyme to complete the process of saccharification, producing the release of monosaccharides (glucose). The level of total sugars in the product is monitored in laboratory through indirect analysis, that is by determining the percentage of reducing sugars. The recirculation, and thus the enzymatic treatment, goes on till the desired percentage of reducing sugars is obtained (about 6 %).

The insoluble residues (vegetable fibres and proteins) have to be removed from the so obtained product and, to this purpose, a well-known centrifugal extractor provided with a continuous cycle is used (Pieralisi mod.FP600, having a capacity of 4000 litres/hour). The product is carried to the extractor, inside which, through centrifugation, a non-quantitative separation of the solid and liquid components occurs.

The cleaned product is an inhomogeneous suspension, and thus has to be homogenized in order to obtain an appearance and a consistency which correspond with those of the desired final product. Furthermore, during homogenization, ingredients such as to give specific peculiarities of colour and/or taste, e.g. powdered vanilla or hazelnut paste, can be added to the product.

The homogenization is performed subject to mixing of the product with vegetable oil (sunflower oil), which acts as emulsifier. The phase of homogenization is performed under a pressure of 280 Bar.

The homogenized product is further cooled through plate heat exchanger and then stocked in a fifth tank. The stocked product is the finished product (rice milk), which is ready for thermal sterilization. The sterilization comprises a phase of preheating, wherein the unsterilized finished product is preheated (40-60°C) through heat exchange with the sterilized finished product. The real sterilization is performed at 140°C, with a stoppage of 6 seconds. The sterilized finished product is then pre-cooled (60-80°C) through heat exchange with the incoming finished product (not heat-treated).

The sterilized finished product is homogenized again under a pressure of 150 Bar and pre-cooled (60-40°C) through heat exchange with the incoming finished product. A further cooling, through water, brings at a final temperature of 30°C the sterilized finished product, which is stocked in a sterile tank. At this point, the rice milk can be packaged in cardboard containers, palletized and stored at room temperature.

## Claims

1. Method for preparing a rice-based drink, comprising:
mixing rice with heated water in order to enable saccharifying means to act on said rice; treating said rice with further saccharifying means, thus obtaining a product which contains glucose ; depriving said product of the portions which have greater molecular weight by using extracting means, in order to enable a consequent stabilization; **characterized in that**, said rice has intact grains before said mixing, said saccharifying means comprises an a-amylase deriving from not genetically modified microorganisms, said a-amylase being used at temperatures comprised between 85°C and 70°C, and said further saccharifying means comprises a glucoamylase, said glucoamylase being used at temperatures comprised between 60° and 70°C.

2. Method according to claim 1, wherein said heated water is at a temperature around 95°C.

3. Method according to claim 1, or 2, wherein said α-amylase is used with a dosage of 1 kilogram/1000 litres of water.

4. Method according to any preceding claim, wherein said extracting means extracts said portions which have greater molecular weight in a continuous manner.

5. Method according to claim 4, wherein said extracting means, which extracts said portions which have greater molecular weight in a continuous manner, comprises centrifugal extractors or separators provided with a continuous working cycle.

6. Method according to any preceding claim, wherein rice originating from organic farming is used.

## Patentansprüche

1. Verfahren zur Herstellung eines auf Reis basierenden Getränkes, welches folgende Schritte aufweist:
Vermengen des Reises mit erhitztem Wasser, um die Einwirkung von Mitteln zum Saccharifizieren auf den Reis zu ermöglichen;
Behandeln des Reises mit weiteren saccharifizierenden Mitteln, um ein Glucose-enthaltendes Produkt zu gewinnen;
Entziehen von Portionen, die ein größeres molekulares Gewicht haben, aus dem Produkt unter Einsatz von Extraktionsmitteln, um eine nachfolgende Stabilisierung zu ermöglichen;
**dadurch gekennzeichnet, dass** der Reis vor dem Vermengen intakte Körner besitzt, dass die saccharifizierenden Mittel eine α-Amylase umfassen, die aus nicht genetisch modifizierten Mikroorganismen abgeleitet ist, wobei die α-Amlyase bei Temperaturen von zwischen 85°C und 70°C eingesetzt wird, und wobei die weiteren saccharifizierenden Mittel eine Glucoamylase umfassen, die bei Temperaturen von zwischen 60°C und 70°C eingesetzt wird.

2. Verfahren nach Anspruch 1, bei welchem das erhitzte Wasser eine Temperatur von ca. 95°C besitzt.

3. Verfahren nach Anspruch 1 oder 2, **dadurch gekennzeichnet, dass** die α-Amylase mit einer Dosierung von 1 Kilogramm/1000 Liter Wasser eingesetzt wird.

4. Verfahren nach einem der vorstehenden Ansprüche, **dadurch gekennzeichnet, dass** die Extraktionsmittel die Portionen, die ein größeres molekulares Gewicht haben, auf eine kontinuierliche Art und Weise extrahieren.

5. Verfahren nach Anspruch 4, **dadurch gekennzeichnet, dass** die Extraktionsmittel, die die Portionen, die ein größeres molekulares Gewicht haben, auf eine kontinuierliche Art und Weise extrahieren, Zentrifugalextraktoren oder - separatoren umfassen, die mit einem kontinuierlichen Arbeitszyklus ausgestattet sind.

6. Verfahren nach einem der vorstehenden Ansprüche, bei welchem Reis aus biologischem Anbau eingesetzt wird.

## Revendications

1. Procédé de préparation d'une boisson à base de riz, comprenant les étapes de : mélange du riz avec de l'eau chauffée afin de permettre à des moyens de saccharification d'agir sur ledit riz ; traitement dudit riz avec des moyens de saccharification supplémentaires, donnant ainsi un produit qui contient du glucose ; suppression dudit produit des fractions qui ont une masse moléculaire plus élevée en utilisant des moyens d'extraction, de manière à permettre une stabilisation conséquente ; ***caractérisé en ce que*** ledit riz a des grains intacts avant ledit mélange, lesdits moyens de saccharification comprennent une alpha-amylase provenant de microorganismes non génétiquement modifiés, ladite alpha-amylase étant utilisée à des températures comprises entre 85°C et 70°C, et lesdits autres moyens de saccharification comprennent une glucoamylase, ladite glucoamylase étant utilisée à des températures comprises entre 60 et 70°C.

2. Procédé selon la revendication 1, dans lequel ladite eau chauffée est à une température d'approximativement 95°C.

3. Procédé selon la revendication 1 ou 2, dans lequel ladite α-amylase est utilisée selon un dosage de 1 kilogramme/1000 litres d'eau.

4. Procédé selon l'une quelconque des revendications précédentes, dans lequel lesdits moyens d'extraction extraient de manière continue lesdites fractions qui ont une masse moléculaire plus élevée.

5. Procédé selon la revendication 4, dans lequel lesdits moyens d'extraction, qui extraient de manière continue lesdites fractions qui ont une masse moléculaire plus élevée, comprennent des séparateurs ou des extracteurs centrifuges possédant un cycle de travail continu.

6. Procédé selon l'une quelconque des revendications précédentes, dans lequel du riz provenant de culture biologique est utilisé.
